# EUROPÄISCHE PATENTSCHRIFT

(11) **EP 3 291 943 B1**
(45) Veröffentlichungstag und Bekanntmachung des Hinweises auf die Patenterteilung: **11.03.2020**
(21) Anmeldenummer: 16721636.5
(22) Anmeldetag: 27.04.2016
(51) Int. Cl.: B23Q 1/01, B23Q 1/54

(54) **WERKZEUGMASCHINE**
MACHINE TOOL
MACHINE-OUTIL

(30) Priorität: 04.05.2015 DE 102015005557
(43) Veröffentlichungstag der Anmeldung: 14.03.2018
(73) Patentinhaber: Hüttmann, Martin, 30900 Wedemark (DE); Langert, Nikolaus, 97267 Himmelstadt (DE)
(72) Erfinder: Hüttmann, Martin, 30900 Wedemark (DE); Langert, Nikolaus, 97267 Himmelstadt (DE)
(74) Vertreter: Jabbusch, Matthias
(86) Internationale Anmeldenummer: PCT/EP2016/000671
(87) Internationale Veröffentlichungsnummer: WO 2016/177452

(56) Entgegenhaltungen:
- EP-A1- 0 355 318
- EP-A1- 0 402 720
- EP-A2- 0 500 309
- DE-A1-102011 000 335
- GB-A- 2 308 323

## Beschreibung

Die Erfindung betrifft eine Werkzeugmaschine zum computergesteuerten Bearbeiten von Werkstücken nach dem Oberbegriff des Anspruchs 1. Eine solche Werkzeugmaschine ist aus der Patentschrift GB 2 308 323 A bekannt.

Bekannte Vorrichtungen dienen dem maschinellen Trennen, Fügen und Beschichten von Werkstücken, wobei die zur Durchführung dieser Fertigungsverfahren zwischen Werkstückaufnahme und Werkzeugaufnahme durchzuführenden Haupt- und Zustellbewegungen über Gerad- und Drehführungen erfolgt. Regelmäßig weisen die bekannten Vorrichtungen dazu auf Kreuztischen ausgebildete Werkstückaufnahmen und an schwenkbaren Bearbeitungsköpfen ausgebildete Werkzeugaufnahmen, beispielsweise in Form von Motorspindeln, auf. Es sind aber auch Vorrichtungen bekannt, bei denen die Werkstückaufnahmen oder die Werkzeugaufnahmen an Roboterarmen bewegt werden. Eine solche Werkzeugmaschine ist beispielsweise aus der europäischen Anmeldeschrift EP 0 500 309 A2 bekannt. Der Einsatz von Kreuztischen oder Roboterarmen erfordert jedoch nachteilig große Bewegungsräume, deren Kapselung zum Schutz vor Verunreinigungen oder zur Schaffung von Arbeitssicherheit aufwendig ist.

Auch ist der Einsatz von Kreuztischen oder Roboterarmen mit großen Verfahrwegen verbunden, die zu Lasten von Arbeitsgeschwindigkeiten und Bauteilsteifigkeiten gehen. Eine hinreichend steife Auslegung von Kreuztischen oder Roboterarmen ist jedoch aufwendig und deshalb mit nachteilig hohen Herstellungskosten verbunden.

Die europäische Patentschrift 0 402 720 B1 beschreibt eine ähnliche Kopiermaschine, die durch Abtastung speziell für das manuelle Übertragen eines zahnmedizinischen Abdruckes von einem Modelkörper auf einen Formkörper ausgelegt ist. Dazu weist die Kopiermaschine ein rotierendes Bearbeitungswerkzeug und ein von Hand entlang des Abdruckes führbaren Tastfühler auf, dessen Bewegungen rein mechanisch auf das Bearbeitungswerkzeugt übertragen werden.

Der Erfindung liegt deshalb die Aufgabe zugrunde, eine Werkzeugmaschine aufzuzeigen, deren bauliche Abmessungen bei gleichen Leistungsspektren maßgeblich verkleinert sind.

Diese Aufgabe ist erfindungsgemäß durch eine Werkzeugmaschine mit den Merkmalen des Patentanspruches 1 gelöst. Vorteilhafte Weiterbildungen der Erfindung sind in den auf den Patentanspruch 1 rückbezogenen Unteransprüchen angegeben.

Die erfindungsgemäße Werkzeugmaschine zeichnet sich dadurch aus, dass jedes Drehwerk wenigstens zwei in Reihe geschaltete und einander querende Drehachsen hat. Mit der Reihenschaltung ihrer Drehachsen weisen die Drehwerke jeweils ein über eine erste Drehachse im Maschinenständer gelagertes erstes Stellglied sowie jeweils ein über eine zweite Drehachse am ersten Stellglied gelagertes zweites Stellglied auf. Die Linearführung dient der Abstandsverstellung zwischen den beiden Spanneinrichtungen unabhängig der von den Drehwerken eingenommenen Drehstellung, so dass es im Rahmen der Erfindung liegt, die Linearführung gegen jedwede Führung zu ersetzen, die dazu geeignet ist, den Abstand zwischen den Spanneinrichtungen zu verstellen. Mit dem bewegungstechnischen Zusammenwirken der beiden Drehwerke und der Linearführung können zwischen der Werkstückaufnahme und der Werkzeugaufnahme in rechnergesteuerten Abläufen sämtliche Relativbewegungen erzeugt werden, die zum Abfahren beliebiger geometrischer Konturen erforderlich sind. Die Relativbewegungen ermöglichen somit sowohl das Positionieren von Werkstück und Werkzeug innerhalb eines Arbeitsraumes als auch das Ausrichten von Werkstück und Werkzeug zueinander. Durch Überlagerung der mit den Drehwerken auf engstem Raum ausführbaren Drehbewegungen sind die zwischen Werkstück und Werkzeug generierten Relativbewegungen vergleichsweise groß, so dass die erfindungsgemäße Werkzeugmaschine vorteilhaft kompakt baut und das Fahren vorteilhaft großer Arbeitsgeschwindigkeiten ermöglicht.

Nach einer ersten Weiterbildung der Erfindung ist die Linearführung zwischen einer der Spanneinrichtungen und dem die Spanneinrichtung haltenden Drehwerk ausgebildet. Die über die Linearführung zu bewegende Masse ist somit vorteilhaft auf die der Spanneinrichtung inklusive ihres darin aufzunehmenden Werkstückes oder Werkzeuges begrenzt. Eine entsprechend auszulegende Linearführung ist leicht dimensioniert und ermöglicht somit das Fahren vorteilhaft großer Arbeitsgeschwindigkeiten. Dennoch liegt es selbstverständlich im Rahmen dieser Erfindung, die Linearführung zwischen den Drehachsen eines der Drehwerke auszubilden oder sie zwischen die Drehwerke in den Maschinenständer hinein zu legen.

Nach einer besonders bevorzugten Weiterbildung der Erfindung ist zwischen den einander querenden Drehachsen jeweils ein rechter Winkel ausgebildet. Andere Winkel sind grundsätzlich möglich, würden das Programmieren der für das computergesteuerte Bearbeiten erforderlichen Steuerungsabläufe jedoch unnötig verkomplizieren.

Außerdem ist bevorzugt vorgesehen, die zwischen dem Maschinenständer und den Drehwerken ausgebildeten Drehachsen parallel zueinander auszurichten. Andere Ausrichtungen sind grundsätzlich zwar möglich, würden das Programmieren der für das computergesteuerte Bearbeiten erforderlichen Steuerungsabläufe jedoch ebenfalls unnötig verkomplizieren.

Nach einer nächsten Weiterbildung der Erfindung weist die Werkzeugmaschine mehr als zwei stellbeweglich aneinander gehaltene Spanneinrichtungen auf, wobei wenigstens eines ihrer Drehwerke zentral angeordnet ist und die jeweils anderen Drehwerke an der Peripherie des zentral angeordneten Drehwerkes verteilt angeordnet sind. Ist mit der Spanneinrichtung des zentral angeordneten Drehwerkes eine Werkzeugaufnahme und sind mit den peripheren Spanneinrichtungen jeweils Werkstückaufnahmen ausgebildet, kann an wenigstens einer der Werkstückaufnahmen ein Werkstückwechsel durchgeführt werden, während ein in einer der jeweils anderen Werkstückaufnahmen bereits eingespanntes Werkstück mit einem Werkzeug der zentral angeordneten Werkzeugaufnahme bearbeitet wird. Auf diese Weise können Rüstzeiten in erheblichem Maße verkürzt werden. Ist mit der Spanneinrichtung des zentral angeordneten Drehwerkes jedoch anders herum eine Werkstückaufnahme und sind mit den peripheren Spanneinrichtungen jeweils Werkzeugaufnahmen ausgebildet, können die Werkzeugaufnahmen mit unterschiedlichen Werkzeugen bestückt sein, während ein in der zentralen Werkstückaufnahme verspanntes Werkstück im fliegenden Wechsel von den unterschiedlichen Werkzeugen der peripher angeordneten Werkzeugaufnahmen bearbeitet wird. Auf diese Weise können die Rüstzeiten ebenfalls in erheblichem Maße verkürzt werden. In einer Ausgestaltung ist es denkbar, die an der Peripherie des zentralen Drehwerkes angeordneten Drehwerke nach Art bekannter Rundtaktmaschinen auf einer Umlaufbahn zu führen.

Nach einer anderen Weiterbildung der Erfindung weist mindestens eine der Spanneinrichtungen wenigstens eine Motorspindel zur Durchführung von Schneidbewegungen auf. Im Falle eines rotierenden Spanwerkzeuges ist die die Werkzeugaufnahme ausbildende Spanneinrichtung als sogenannte Werkzeugschnittstelle Teil der Motorspindel. Im Falle eines als Drehmeißel ausgebildeten Werkzeuges ist die die Werkstückaufnahme ausbildende Spanneinrichtung als Drehfutter ausgebildet. Ein vorteilhaft breites Spektrum an Bearbeitungen deckt die erfindungsgemäße Werkzeugmaschine ab, wenn beiden Spanneinrichtungen ein Drehantrieb zur Durchführung von Schneidbewegungen zugeordnet ist.

Um die für das computergesteuerte Bearbeiten von Werkstücken erforderlichen Steuerungsabläufe zu einfach wie möglich zu gestalten, ist mit den einander querenden Drehachsen wenigstens eines der Drehwerke ein Achskreuz ausgebildet. Weist eine der Spanneinrichtungen eine Motorspindel auf, ist mit deren Drehachse und mit den einander querenden Drehachsen des die Motorspindel aufnehmenden Drehwerkes ein Achsknoten ausgebildet. Für eine möglichst achsnahe Ausbildung eines zwischen den Spanneinrichtungen gelegenen Arbeitsraumes sind die über die ersten Drehachsen im Maschinenständer drehbar gelagerten ersten Stellglieder als gekröpfte Wellen oder gekröpfte Wellenstummel ausgeführt.

Ausführungsbeispiele der Erfindung, aus denen sich weitere erfinderische Merkmale ergeben, sind in den Zeichnungen 1-3 dargestellt. Es zeigen:
- Figur 1:: eine perspektivische Prinzipskizze einer erfindungsgemäßen Werkzeugmaschine in einem ersten Ausführungsbeispiel;
- Figur 2:: eine perspektivische Prinzipskizze der erfindungsgemäßen Werkzeugmaschine in einem zweiten Ausführungsbeispiel;
- Figur 3:: eine perspektivische Prinzipskizze der erfindungsgemäßen Werkzeugmaschine in einem dritten Ausführungsbeispiel;
- Figur 4:: eine perspektivische Prinzipskizze einer Werkzeugmaschine in einem Beispiel, das nicht unter den Ansprüchen fällt, und
- Figur 5:: eine perspektivische Prinzipskizze einer Werkzeugmaschine in einem Beispiel, das nicht unter den Ansprüchen fällt.

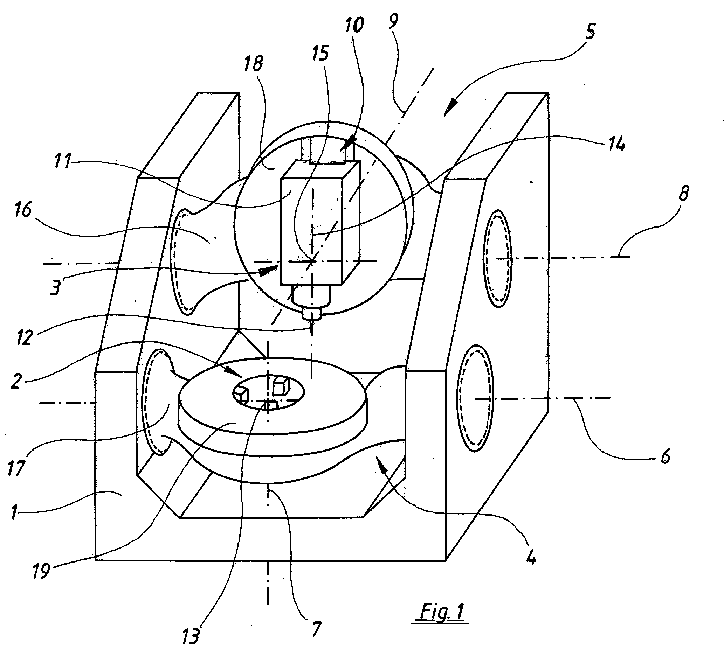

Die Figur 1 zeigt eine perspektivische Prinzipskizze einer erfindungsgemäßen Werkzeugmaschine mit einem Maschinenständer 1 und zwei stellbeweglich aneinander gehaltenen Spanneinrichtungen 2, 3, wobei mit der Spanneinrichtung 2 eine Werkstückaufnahme und mit der Spanneinrichtung 3 eine Werkzeugaufnahme ausgebildet ist. Die Spanneinrichtungen 2, 3 sind jeweils über ein Drehwerk 4, 5 mit zwei in Reihe geschalteten und einander querenden Drehachsen 6, 7 bzw. 8, 9 stellbeweglich im Maschinenständer 1 gehalten. Zwischen der Spanneinrichtung 3 und dem Maschinenständer 1 ist eine Linearführung 10 ausgebildet, die zwischen der Spanneinrichtung 3 und dem diese haltenden Drehwerk 5 angeordnet ist. Während zwischen den einander querenden Drehachsen 6, 7 bzw. 8, 9 jeweils ein rechter Winkel ausgebildet ist, sind die zwischen dem Maschinenständer 1 und den Drehwerken 4, 5 ausgebildeten Drehachsen 6, 8 parallel zueinander ausgerichtet. Die Spanneinrichtung 3 weist eine Motorspindel 11 zur Durchführung von Schneidbewegungen mit einem in der Spanneinrichtung 3 eingespannten Werkzeug 12 auf. Während mit den einander querenden Drehachsen 6, 7 des Drehwerkes 4 ein Achskreuz 13 ausgebildet ist, ist mit der Drehachse 14 der Motospindel 11 und mit den einander querenden Drehachsen 8, 9 des die Motorspindel 11 aufnehmenden Drehwerkes 5 ein Achsknoten 15 ausgebildet. Mit der Reihenschaltung ihrer Drehachsen 6, 7 bzw. 8, 9 weisen die Drehwerke 4, 5 jeweils ein über die Drehachsen 6, 8 im Maschinenständer 1 gelagertes erstes Stellglied 16, 17 sowie jeweils ein über die Drehachsen 7, 9 am ersten Stellglied 16 bzw. 17 gelagertes zweites Stellglied 18, 19 auf. Für eine möglichst achsnahe Ausbildung eines zwischen den Spanneinrichtungen 2, 3 gelegenen Arbeitsraumes sind die im Maschinenständer 1 gelagerten ersten Stellglieder 16, 17 als doppelt gekröpfte Wellen ausgebildet. Die zweiten Stellglieder 18, 19 sind zur Aufnahme der Spanneinrichtungen 2, 3 als Drehteller ausbildet.

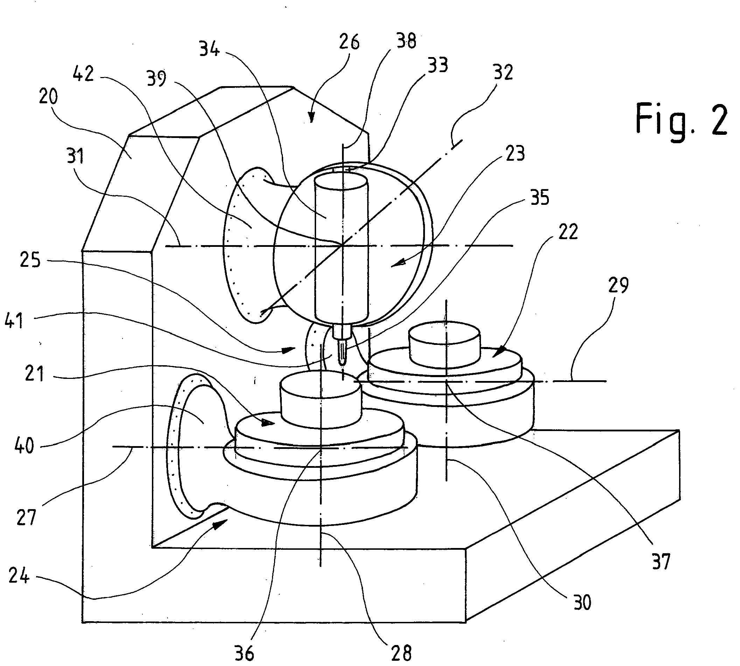

Die Figur 2 zeigt eine perspektivische Prinzipskizze der erfindungsgemäßen Werkzeugmaschine in einem zweiten Ausführungsbeispiel, in welchem die Werkzeugmaschine einen Maschinenständer 20 und drei stellbeweglich aneinander gehaltene Spanneinrichtungen 21, 22, 23 aufweist, wobei mit den Spanneinrichtungen 21, 22 jeweils eine Werkstückaufnahme und mit der Spanneinrichtung 23 eine Werkzeugaufnahme ausgebildet ist. Die Spanneinrichtungen 21, 22, 23 sind jeweils über ein Drehwerk 24, 25, 26 mit zwei in Reihe geschalteten und einander querenden Drehachsen 27, 28 bzw. 29, 30 bzw. 31, 32 stellbeweglich im Maschinenständer 20 gehalten. Zwischen der Spanneinrichtung 23 und dem Maschinenständer 20 ist eine Linearführung 33 ausgebildet, die zwischen der Spanneinrichtung 23 und dem diese Spanneinrichtung haltenden Drehwerk 26 angeordnet ist. Während auch hier zwischen den einander querenden Drehachsen 27, 28 bzw. 29, 30 bzw. 31, 32 jeweils ein rechter Winkel ausgebildet ist, sind die zwischen dem Maschinenständer 20 und den Drehwerken 24, 25, 26 ausgebildeten Drehachsen 27, 29, 31 ebenfalls parallel zueinander ausgerichtet. Während das Drehwerk 26 der als Werkzeugaufnahme ausgebildeten Spanneinrichtung 23 eine zentrale Anordnung aufweist, sind die beiden anderen Drehwerke 24, 25 an der unteren Peripherie des zentral angeordneten Drehwerkes 26 verteilt angeordnet. Die als Werkzeugaufnahme ausgebildete Spanneinrichtung 23 weist eine Motorspindel 34 zur Durchführung von Schneidbewegungen mit einem in der Spanneinrichtung 23 eingespannten Werkzeug 35 auf. Während mit den einander querenden Drehachsen 27, 28 bzw. 29, 30 der Drehwerke 24, 25 jeweils ein Achskreuz 36, 37 ausgebildet ist, ist mit der Drehachse 38 der Motorspindel 34 und mit den einander querenden Drehachsen 31, 32 des die Motorspindel 34 aufnehmenden Drehwerkes 26 ein Achsknoten 29 ausgebildet. Mit der Reihenschaltung ihrer Drehachsen 27, 28 bzw. 29, 30 bzw. 31, 32 weisen die Drehwerke 24, 25, 26 jeweils ein über die Drehachsen 27, 29, 31 im Maschinenständer 20 gelagertes erstes Stellglied 40, 41, 42 sowie jeweils ein über die Drehachsen 28, 30, 32 an dem ersten Stellglied 40, 41, 42 gelagertes zweites Stellglied 43, 44, 45 auf. Während die ersten Stellglieder 40, 41, 42 jeweils als gekröpfte Wellenstummel ausbildet sind, sind die zweiten Stellglieder 43, 44, 45 jeweils als Drehteller ausgeführt.

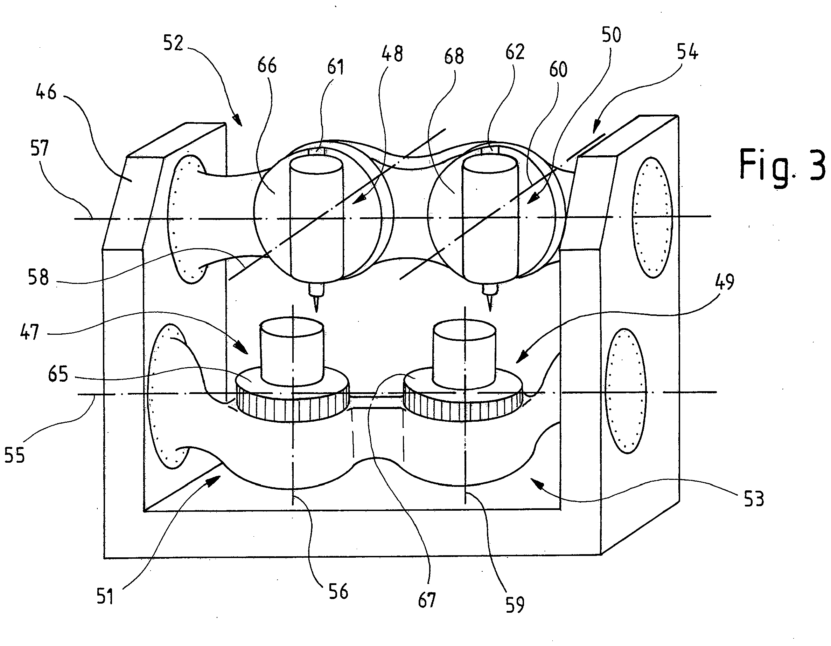

Die Figur 3 zeigt eine perspektivische Prinzipskizze der erfindungsgemäßen Werkzeugmaschine in einem dritten Ausführungsbeispiel, in welchem die Werkzeugmaschine einen Maschinenständer 46 und vier stellbeweglich aneinander gehaltene Spanneinrichtungen 47, 48, 49, 50 aufweist, wobei mit den Spanneinrichtung 47, 49 jeweils eine Werkstückaufnahme und mit den Spanneinrichtungen 48, 50 jeweils eine Werkzeugaufnahme ausgebildet ist. Die Spanneinrichtungen 47, 48, 49, 50 sind jeweils über ein Drehwerk 51, 52, 53, 54 mit zwei in Reihe geschalteten und einander querenden Drehachsen 55, 56 bzw. 57, 58 bzw. 55, 59 bzw. 57, 60 stellbeweglich im Maschinenständer 46 gehalten. Zwischen jeder der beiden eine Werkzeugaufnahme ausbildenden Spanneinrichtungen 48, 50 und dem Maschinenständer 46 ist eine Linearführung 61 bzw. 62 ausgebildet, die zwischen der Spanneinrichtung 48 bzw. 50 und dem diese Spanneinrichtung 48 bzw. 50 haltenden Drehwerk 52 bzw. 54 angeordnet ist. Während die Drehwerke 52, 54 über die gemeinsame Drehachse 57 zusammengeschaltet sind, sind die Drehwerke 51, 53 über die gemeinsame Drehachse 55 zusammengeschaltet. Mit der Reihenschaltung ihrer Drehachsen 55, 56 bzw. 57, 58 bzw. 55, 59 bzw. 57, 60 weisen die Drehwerke 51, 52, 53, 54 jeweils ein über die Drehachsen 55, 57 im Maschinenständer 46 gelagertes erstes Stellglied 63 bzw. 64 sowie jeweils ein über die Drehachsen 56, 58, 59, 60 an den ersten Stellgliedern 63, 64 gelagertes zweites Stellglied 65, 66, 67, 68 auf. Während die beiden ersten Stellglieder 63, 64 jeweils als doppelt gekröpfte Welle ausgebildet sind, sind die in zwei Paaren jeweils an einer der doppelt gekröpften Wellen angelenkten zweiten Stellglieder 65, 66, 67, 68 jeweils als Drehteller ausgeführt.

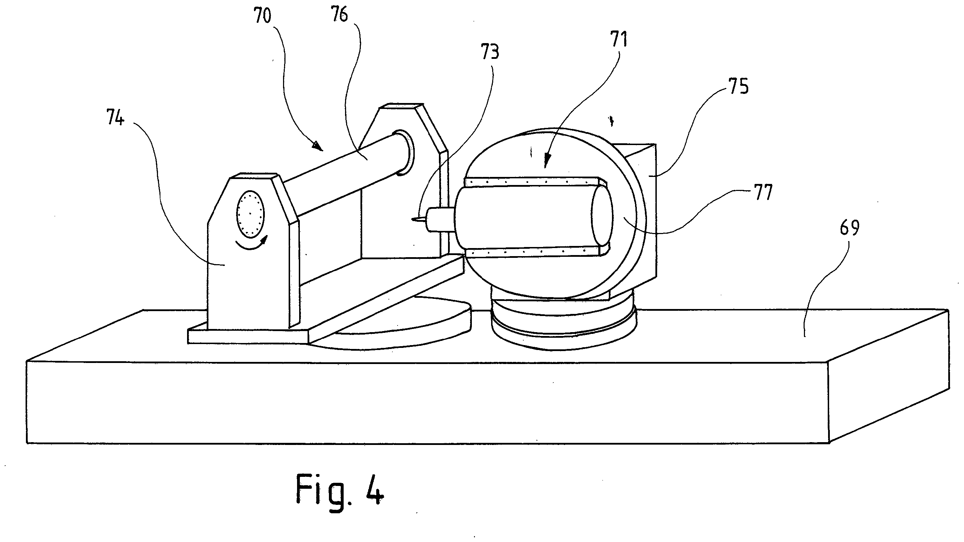

Die Figur 4 zeigt eine perspektivische Prinzipskizze einer Werkzeugmaschine, an einem Beispiel, das nicht unter den Ansprüchen fällt. In diesem Beispiel hat die Werkzeugmaschine einen als Sockelplatte ausgebildeten Maschinenständer 69 und zwei stellbeweglich aneinander gehaltene Spanneinrichtungen 70, 71, wobei mit der Spanneinrichtung 70 eine Werkstückaufnahme und mit der Spanneinrichtung 71 eine Werkzeugaufnahme ausgebildet ist. Mit der Reihenschaltung ihrer Drehachsen weisen die Drehwerke jeweils ein über Drehachsen im Maschinenständer 69 gelagertes erstes Stellglied 74, 75 sowie jeweils ein über Drehachsen an dem ersten Stellglied 74, 75 gelagertes zweites Stellglied 76, 77 auf. In diesem Beispiel ist das erste Stellglied 74 als Zweipunktwellenlager und das erste Stellglied 75 als einfach gekröpfter Wellenstummel ausgebildet. Während das der Spanneinrichtung 70 zugeordnete zweite Stellglied 76 als Aufnahmewelle für ein Werkstück ausgebildet ist, ist das der Spanneinrichtung 71 zugeordnete zweite Stellglied 77 wieder als Drehteller ausgeführt.

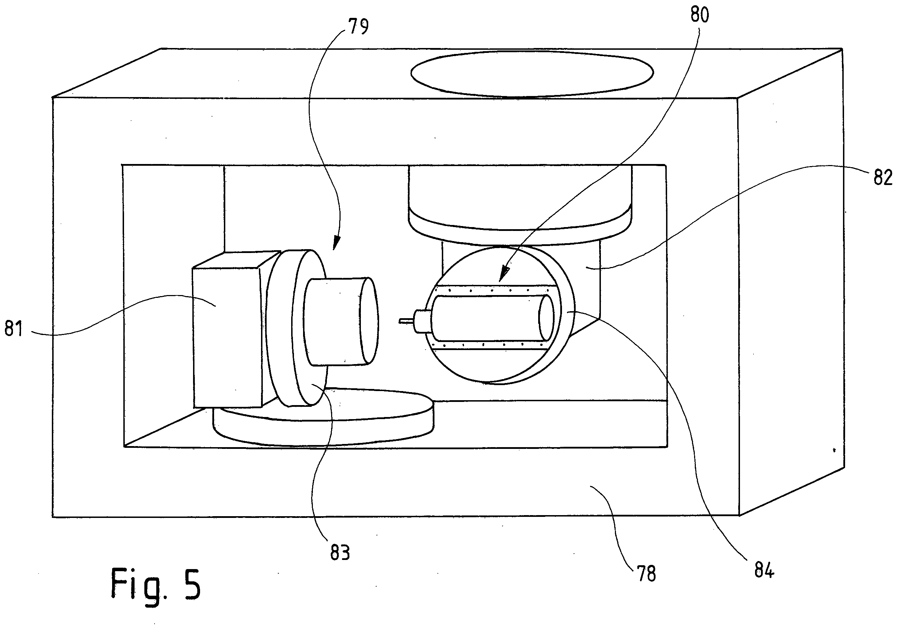

Auch die Figur 5 zeigt eine perspektivische Prinzipskizze einer Werkzeugmaschine, in einem Beispiel, das nicht unter den Ansprüchen fällt. Hier hat die Werkzeugmaschine einen als Rahmenwerk ausgebildeten Maschinenständer 78 und zwei stellbeweglich aneinander gehaltene Spanneinrichtungen 79, 80, wobei mit der Spanneinrichtung 79 eine Werkstückaufnahme und mit der Spanneinrichtung 80 eine Werkzeugaufnahme ausgebildet ist. Mit der Reihenschaltung ihrer Drehachsen weisen die Drehwerke auch hier jeweils ein über Drehachsen im Maschinenständer 78 gelagertes erstes Stellglied 81, 82 sowie jeweils ein über Drehachsen an dem ersten Stellglied 81, 82 gelagertes zweites Stellglied 83, 84 auf. In diesem Beispiel sind beide erste Stellglieder 81, 82 als gekröpfte Wellenstummel und beide zweite Stellglieder 83, 84 als Drehteller ausgeführt.

## Patentansprüche

1. Werkzeugmaschine zum computergesteuerten Bearbeiten von Werkstücken, mit einem Maschinenständer (1; 20) und wenigstens zwei stellbeweglich aneinander gehaltenen Spanneinrichtungen (2, 3; 21-23), wobei mit einer der Spanneinrichtungen (2, 3; 21-23) wenigstens eine Werkstückaufnahme und mit der jeweils anderen Spanneinrichtung (2, 3; 21-23) wenigstens eine Werkzeugaufnahme ausgebildet ist, die Spanneinrichtungen (2, 3; 21-23) jeweils über ein Drehwerk (4, 5; 24-26) stellbeweglich im Maschinenständer (1; 20) gehalten sind, und zwischen wenigstens einer der Spanneinrichtungen (2, 3; 21-23) und dem Maschinenständer (1; 20) wenigstens eine Linearführung (10; 33) ausgebildet ist, wobei jedes Drehwerk wenigstens zwei in Reihe geschaltete und einander querende Drehachsen (6-9; 27-32) hat,
**dadurch gekennzeichnet,**
**dass** die über die ersten Drehachsen im Maschinenständer drehbar gelagerten ersten Stellglieder als gekröpfte Wellen oder gekröpfte Wellenstummel ausgeführt sind.

2. Werkzeugmaschine nach Anspruch 1, **dadurch gekennzeichnet, dass** die Linearführung (10; 33) zwischen einer der Spanneinrichtungen (2, 3; 21-23) und dem die Spanneinrichtung haltenden Drehwerk (4, 5; 24-26) ausgebildet ist.

3. Werkzeugmaschine nach Anspruch 1 oder 2, **dadurch gekennzeichnet, dass** zwischen den einander querenden Drehachsen (6-9; 27-32) jeweils ein rechter Winkel ausgebildet ist.

4. Werkzeugmaschine nach einem der Ansprüche 1 bis 3, **dadurch gekennzeichnet, dass** die zwischen dem Maschinenständer (1; 20) und den Drehwerken (4, 5; 24-26) ausgebildeten Drehachsen (6, 8; 27, 29, 31) der einander querenden Drehachsen (6-9; 27-32) parallel zueinander ausgerichtet sind.

5. Werkzeugmaschine nach einem der Ansprüche 1 bis 4, **dadurch gekennzeichnet, dass** sie mehr als zwei stellbeweglich aneinander gehaltene Spanneinrichtungen (21-23) aufweist, wobei wenigstens eines ihrer Drehwerke (24-26) zentral angeordnet ist und die jeweils anderen Drehwerke (24, 25) an der Peripherie des zentral angeordneten Drehwerkes (26) verteilt angeordnet sind.

6. Werkzeugmaschine nach einem der Ansprüche 1 bis 5, **dadurch gekennzeichnet, dass** mindestens eine der Spanneinrichtungen (2, 3; 21-23) wenigstens eine Motorspindel (11; 34) zur Durchführung von Schneidbewegungen aufweist.

7. Werkzeugmaschine nach einem der Ansprüche 1 bis 6, **dadurch gekennzeichnet, dass** mit den einander querenden Drehachsen (6-9; 27-32) wenigstens eines der Drehwerke (4, 5; 24-26) ein Achskreuz (13, 36; 37) ausgebildet ist.

8. Werkzeugmaschine nach Anspruch 6 oder 7, **dadurch gekennzeichnet, dass** mit der Drehachse (14; 38) der Motorspindel (11; 34) und mit den einander querenden Drehachsen (6-9; 27-32) des die Motorspindel (11; 34) aufnehmenden Drehwerkes (5; 26) ein Achsknoten (15; 39) ausgebildet ist.

## Claims

1. A machine tool for the computer-controlled machining of workpieces, comprising a machine stand (1; 20) and at least two clamping devices (2, 3; 21-23) that are held on one another in an adjustable and movable manner, wherein at least one workpiece receptacle is formed by one of the clamping devices (2, 3; 21-23) and at least one tool receptacle is formed by the other clamping device (2, 3; 21-23), wherein the clamping devices (2, 3; 21-23) are respectively held in the machine stand (1; 20) in an adjustable and movable manner by means of a rotary mechanism (4, 5; 24-26) and at least one linear guide (10; 33) is formed between at least one of the clamping devices (2, 3; 21-23) and the machine stand (1; 20), and wherein each rotary mechanism has at least two rotational axes (6-9; 27-32) that are connected to one another in series and cross one another,
**characterized in**
**that** the first actuating elements, which are rotatably mounted in the machine stand by means of the first rotational axes, are realized in the form of elbowed shafts or elbowed stub shafts.

2. The machine tool according to claim 1, **characterized in that** the linear guide (10; 33) is formed between one of the clamping devices (2, 3; 21-23) and the rotary mechanism (4, 5; 24-26) holding the clamping device.

3. The machine tool according to claim 1 or 2, **characterized in that** a right angle is respectively formed between the crossing rotational axes (6-9; 27-32) .

4. The machine tool according to one of claims 1 to 3, **characterized in that** the rotational axes (6, 8; 27, 29, 31) of the crossing rotational axes (6-9; 27-32), which are formed between the machine stand (1; 20) and the rotary mechanisms (4, 5; 24-26), are aligned parallel to one another.

5. The machine tool according to one of claims 1 to 4, **characterized in that** it comprises more than two clamping devices (21-23) that are held on one another in an adjustable and movable manner, wherein at least one of its rotary mechanisms (24-26) is arranged centrally and the other respective rotary mechanisms (24, 25) are arranged on the periphery of the centrally arranged rotary mechanism (26) in a distributed manner.

6. The machine tool according to one of claims 1 to 5, **characterized in that** at least one of the clamping devices (2, 3; 21-23) comprises at least one motor spindle (11; 34) for carrying out cutting motions.

7. The machine tool according to one of claims 1 to 6, **characterized in that** an axial cross (13, 36; 37) is formed by the crossing rotational axes (6-9; 27-32) of at least one of the rotary mechanisms (4, 5; 24-26).

8. The machine tool according to claim 6 or 7, **characterized in that** an axial node (15; 39) is formed by the rotational axis (14; 38) of the motor spindle (11; 34) and by the crossing rotational axes (6-9; 27-32) of the rotary mechanism (5; 26) accommodating the motor spindle (11; 34).

## Revendications

1. Machine-outil, destinée à l'usinage commandé par ordinateur de pièces d'œuvre, pourvue d'un bâti de machine (1 ; 20) et d'au moins deux systèmes de bridage (2, 3 ; 21 à 23) maintenus l'un à l'autre en étant mobiles en réglage, avec l'un des systèmes de bridage (2, 3 ; 21 à 23) étant formé au moins un porte-pièce et avec l'autre système de bridage (2, 3 ; 21 à 23) respectif étant formé au moins un porte-outil, les systèmes de bridage (2, 3 ; 21 à 23) étant maintenus en étant mobiles en réglage dans le bâti de machine (1 ; 20), respectivement par l'intermédiaire d'un mécanisme rotatif (4, 5 ; 24 à 26) et entre au moins l'un des systèmes de bridage (2, 3 ; 21 à 23) et le bâti de machine (1 ; 20) étant formé au moins un guidage linéaire (10 ; 33), chaque mécanisme rotatif ayant au moins deux axes de rotation (6 à 9 ; 27 à 32) montés en série et se croisant, **caractérisée en ce que** les premiers actionneurs logés en rotation par l'intermédiaire des premiers axes de rotation dans le bâti de machine sont réalisés sous la forme d'arbres coudés ou de bouts d'arbres coudés.

2. Machine-outil selon la revendication 1, **caractérisée en ce que** le guidage linéaire (10 ; 33) est formé entre l'un des systèmes de bridage (2, 3 ; 21 à 23) et le mécanisme rotatif (4, 5 ; 24 à 26) qui maintient le système de bridage.

3. Machine-outil selon la revendication 1 ou 2, **caractérisée en ce qu'**entre les axes de rotation (6 à 9 ; 27 à 32) qui se croisent est formé respectivement un angle droit.

4. Machine-outil selon l'une quelconque des revendications 1 à 3, **caractérisée en ce que** les axes de rotation (6, 8 ; 27, 29, 31) formés entre le bâti de machine (1 ; 20) et les mécanismes rotatifs (4, 5 ; 24 à 26) des axes de rotation (6 à 9 ; 27 à 32) qui se croisent sont orientés à la parallèle les uns des autres.

5. Machine-outil selon l'une quelconque des revendications 1 à 4, **caractérisée en ce qu'**elle comporte plus de deux systèmes de bridage (21 à 23) maintenus l'un à l'autre en étant mobiles en réglage, au moins l'un de leurs mécanismes rotatifs (24 à 26) étant placé de manière centrale et les autres mécanismes rotatifs (24, 25) respectifs étant placés en distribution sur la périphérie du mécanisme rotatif (26) placé de manière centrale.

6. Machine-outil selon l'une quelconque des revendications 1 à 5, **caractérisée en ce qu'**au moins l'un des systèmes de bridage (2, 3 ; 21 à 23) comporte au moins une broche moteur (11 ; 34) pour l'exécution de mouvements de coupe.

7. Machine-outil selon l'une quelconque des revendications 1 à 6, **caractérisée en ce qu'**avec les axes de rotation (6 à 9 ; 27 à 32) qui se croisent d'au moins l'un des mécanismes rotatifs (4, 5 ; 24 à 26) est formé un croisement d'axe (13, 36 ; 37).

8. Machine-outil selon la revendication 6 ou 7, **caractérisée en ce qu'**avec l'axe de rotation (14 ; 38) de la broche moteur (11 ; 34) et avec les axes de rotation (6 à 9 ; 27 à 32) qui se croisent du mécanisme rotatif (5 ; 26) réceptionnant la broche moteur (11 ; 34) est formé un nœud d'axe (15 ; 39).
